# EUROPEAN PATENT SPECIFICATION

(11) **EP 3 874 934 B1**
(45) Date of publication and mention of the grant of the patent: **08.05.2024**
(21) Application number: 21160839.3
(22) Date of filing: 04.03.2021
(51) Int. Cl.: A01D 57/02

(54) **VARIABLE SPEED REEL DRIVE FOR A HEADER OF AN AGRICULTURAL HARVESTER**
HASPELANTRIEB MIT VARIABLER DREHZAHL FÜR EINEN ERNTEVORSATZ EINER LANDWIRTSCHAFTLICHEN ERNTEMASCHINE
ENTRAÎNEMENT DE BOBINE À VITESSE VARIABLE POUR L'EMBASE D'UNE MOISSONNEUSE AGRICOLE

(30) Priority: 05.03.2020 US 202016810374
(43) Date of publication of application: 08.09.2021
(73) Proprietor: CNH Industrial Belgium N.V., 8210 Zedelgem (BE)
(72) Inventor: COOK, Joel T., Akron, Pennsylvania 17501 (US); DEICHMANN, Scott Palmer, Phoenixville, Pennsylvania 19460 (US); FARLEY, Herbert M., Elizabethtown, Pennsylvania 17022 (US); McKINNEY, Preston L., Rebersburg, Pennsylvania 16872 (US); TODDERUD, Stephen, Lancaster, Pennsylvania 17602 (US); WARD, Kevin, Lititz, Pennsylvania 17543 (US)
(74) Representative: CNH Industrial IP Department

(56) References cited:
- CA-A1- 2 888 545
- CA-C- 2 888 545
- JP-A- 2008 263 909
- JP-A- 2012 170 398
- JP-A- 2013 081 379
- JP-A- 2016 198 011

## Description

The exemplary embodiments of present invention relate generally to a header of a plant cutting machine (e.g., a combine harvester) and, more specifically, to a header having a variable speed reel drive located between and driving at least one of adjacent first and second reels.

### BACKGROUND OF THE INVENTION

An agricultural harvester e.g., a plant cutting machine, such as, but not limited to, a combine or a windrower, generally includes a header operable for severing and collecting plant or crop material as the harvester is driven over a crop field. The header has a plant cutting mechanism, e.g., a cutter bar, for severing the plants or crops via, for example, an elongate sickle mechanism that reciprocates sidewardly relative to a non-reciprocating guard structure. The header further includes at least one driven reel for directing upstanding crops towards the plant cutting mechanism. After crops are cut, they are collected inside the header and transported via a conveyor such as a draper belt towards a feederhouse located centrally inside the header.

Conventional agricultural harvester headers often include two or more adjacent reels that are driven at one outer lateral end by a hydraulic or electric motor coupled to a gearbox or other driving mechanism that is drivingly connected to the reels. A joint is located between adjacent reels so that the rotational velocity of the reels may be reduced or increased in unison as may be dictated by crop conditions. A disadvantage with providing of motors and driving mechanisms at the ends of the reels is that they add to the overall header width without increasing the effective cutting width of the header. Additionally, a conventional hydraulic motor cannot accommodate both low-speed, high-torque and high-speed, low torque operations very well.

Document JP 2016 198011 discloses a known agricultural harvester comprising a first reel and a second reel adjacent the first reel. SUMMARY OF THE INVENTION

In accordance with an exemplary embodiment there is provided an agricultural harvester header comprising a first reel and a second reel adjacent the first reel. The header further includes a variable speed reel drive between the first and second reels and operatively connected to at least one of the first reel for rotatably driving the first reel and the second reel for rotatably driving the second reel.

An aspect of the exemplary embodiment is that the variable speed reel drive includes a variable speed motor, and a multi-speed gearbox operatively coupled to the variable speed motor and at least one of the first and second reels. Another aspect of the exemplary embodiment is that the variable speed reel drive includes a motor, and a continuously variable transmission operatively connected to the motor and at least one of the first reel for rotatably driving the first reel and second reel for rotatably driving the second reel. Another aspect of the exemplary embodiment is that the variable speed reel drive includes a motor, and a planetary gear drive operatively coupled to the motor and at least one of the first and second reels.

In accordance with the present disclosure, there is provided an agricultural harvester header having a variable speed reel drive located between and driving at least one of adjacent first and second reels. Such a construction enables control of the motors so that the rotational velocity of the reels may be synchronously reduced or increased as may be dictated by crop conditions. In addition, provision of motors and driving mechanisms between the reels does not increase the overall header width while maintaining the effective cutting width of the header. Another advantage of a variable speed reel drive is that it can readily accommodate both low-speed, high-torque and high-speed, low torque operations. In addition, the variable speed reel drives according to the subject disclosure enable changes in mechanical ratio along with changes in hydraulic ratio.

Other features and advantages of the subject disclosure will be apparent from the following more detailed description of the exemplary embodiments.

### BRIEF DESCRIPTION OF THE DRAWINGS

The foregoing summary, as well as the following detailed description of the exemplary embodiments of the subject disclosure, will be better understood when read in conjunction with the appended drawings. For the purpose of illustrating the present disclosure, there are shown in the drawings exemplary embodiments. It should be understood, however, that the subject application is not limited to the precise arrangements and instrumentalities shown.
FIG. 1 is a front elevation view of an agricultural harvester including a header in accordance with an exemplary embodiment of the subject disclosure;
FIG. 2 is an enlarged partial top plan view of a variable speed reel drive in accordance with an exemplary embodiment of the subject disclosure suitable for use with the header of FIG. 1;
FIG. 3 is an enlarged perspective view of a portion of the variable speed reel drive of FIG. 2 with certain elements omitted for purposes of illustration;
FIG. 4 is an enlarged partial top plan view of a variable speed reel drive in accordance with a further exemplary embodiment of the subject disclosure suitable for use with the header of FIG. 1;
FIG. 5 is an enlarged perspective view of a portion of the variable speed reel drive of FIG. 4 with certain elements omitted for purposes of illustration;
FIG. 6 is a perspective view of a portion of the variable speed reel drive of FIG. 4;
FIG. 7 is an enlarged partial rear view of a variable speed reel drive in accordance with a further exemplary embodiment of the subject disclosure suitable for use with the header of FIG. 1;
FIG. 8 is an enlarged perspective of a portion of the variable speed reel drive of FIG. 7 with certain elements omitted for purposes of illustration; and
FIG. 9 is an enlarged perspective view of the variable speed reel drive of FIG. 7.

### DETAILED DESCRIPTION OF THE DRAWINGS

Reference will now be made in detail to the various exemplary embodiments of the subject disclosure illustrated in the accompanying drawings. Wherever possible, the same or like reference numbers will be used throughout the drawings to refer to the same or like features. It should be noted that the drawings are in simplified form and are not drawn to precise scale. Certain terminology is used in the following description for convenience only and is not limiting. Directional terms such as top, bottom, left, right, above, below and diagonal, are used with respect to the accompanying drawings. The term "distal" shall mean away from the center of a body. The term "proximal" shall mean closer towards the center of a body and/or away from the "distal" end. The words "inwardly" and "outwardly" refer to directions toward and away from, respectively, the geometric center of the identified element and designated parts thereof. Such directional terms used in conjunction with the following description of the drawings should not be construed to limit the scope of the claims. Additionally, the term "a," as used in the specification, means "at least one." The terminology includes the words above specifically mentioned, derivatives thereof, and words of similar import.

The terms "grain," "ear," "stalk," "leaf," and "crop material" are used throughout the specification for convenience and it should be understood that these terms are not intended to be limiting. Thus, "grain" refers to that part of a crop which is harvested and separated from discardable portions of the crop material. The header of the subject application is applicable to a variety of crops, including but not limited to wheat, soybeans and small grains. The terms "debris," "material other than grain," and the like are used interchangeably.

"About" as used herein when referring to a measurable value such as an amount, a temporal duration, and the like, is meant to encompass variations of ±20%, ±10%, ±5%, ±1%, or ±0.1% from the specified value, as such variations are appropriate.

"Substantially" as used herein shall mean considerable in extent, largely but not wholly that which is specified, or an appropriate variation therefrom as is acceptable within the field of art.

Throughout the subject application, various aspects thereof can be presented in a range format. It should be understood that the description in range format is merely for convenience and brevity and should not be construed as an inflexible limitation on the scope of the subject disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 2.7, 3, 4, 5, 5.3, and 6. This applies regardless of the breadth of the range.

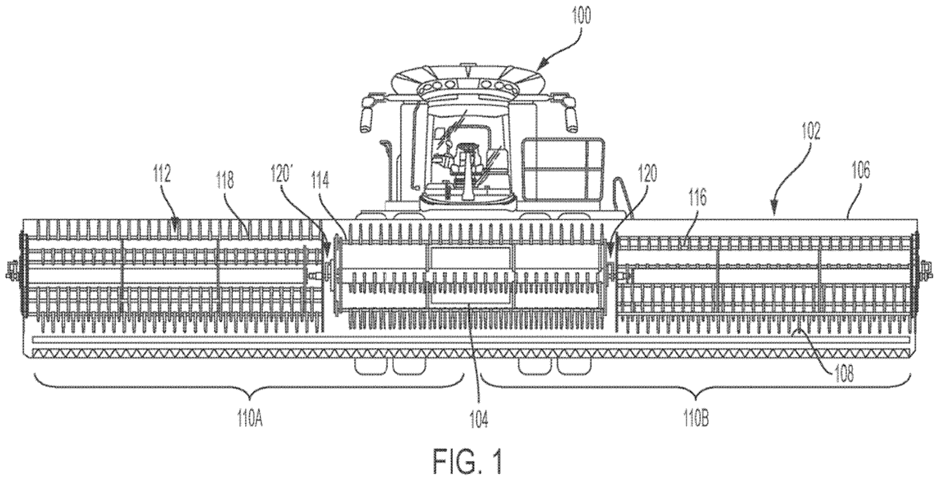

Referring now to the drawings, FIG. 1 illustrates an agricultural harvester 100 in accordance with an exemplary embodiment of the present disclosure. For exemplary purposes only, the agricultural harvester is illustrated as a combine harvester. The harvester 100 includes a header 102 attached to a forward end of the harvester 100, which is configured to cut crops, including (without limitation) small grains (e.g., wheat, soybeans, grain, etc.), and to induct the cut crops into a feederhouse 104 as the harvester moves forward over a crop field.

The header 102 includes a frame 106 having a floor 108 that is supported in desired proximity to the surface of a crop field. First and second cutting assemblies 110A, 110B extend transversely along a forward edge of the floor 108 i.e., in a widthwise direction of the harvester. The first and second cutting assemblies 110A, 110B, are configured to cut crops in preparation for induction into the feederhouse 104. Exemplary cutting assemblies applicable to the present exemplary embodiments are disclosed in U.S. Patent Nos. 7,730,709 and 8,151,547.

The header may include one or more draper conveyor belts for conveying cut crops to the feederhouse 104, which is configured to convey the cut crops into the harvester 100 for threshing and cleaning as the harvester moves forward over a crop field. The header 102 further includes an elongated, multi-segment rotatable reel 112 which extends above and in close proximity to the first and second cutting assemblies 110A, 110B. The rotatable reel 112 is configured to cooperate with the one or more draper conveyors in conveying cut crops to the feeder house 104 for threshing and cleaning. While the foregoing aspects of the harvester are being described with respect to the header shown, the cutting assembly of the subject application can be applied to any other header having use for such a cutting assembly.

The multi-segment rotatable reel 112 comprises a first reel 114, a second reel 116 adjacent the first reel and, optionally, a third reel 118 adjacent the first reel opposite the second reel. The header further comprises a variable speed reel drive 120 between the first and second reels 114, 116 and operatively connected to at least one of the first reel for rotatably driving the first reel and the second reel for rotatably driving the second reel. In lieu of the variable speed reel drive 120 between the first and second reels 114, 116, the header may include a variable speed reel drive 120' between the first and third reels 114, 118 and operatively connected to at least one of the first reel for rotatably driving the first reel and the third reel for rotatably driving the third reel. In the event the header is equipped with the variable speed reel drive 120, the third reel 118 is configured to be directly driven by the first reel 114. Conversely, in the event the header is equipped with the variable speed drive 120', the second reel 116 is configured to be directly driven by the first reel 114.

According to an aspect, the variable speed reel drive 120 can be operatively connected to the first and second reels 114, 116 for rotatably driving the first and second reels. Likewise, the variable speed reel drive 120' can be operatively connected to the first and third reels 114, 118 for rotatably driving the first and third reels.

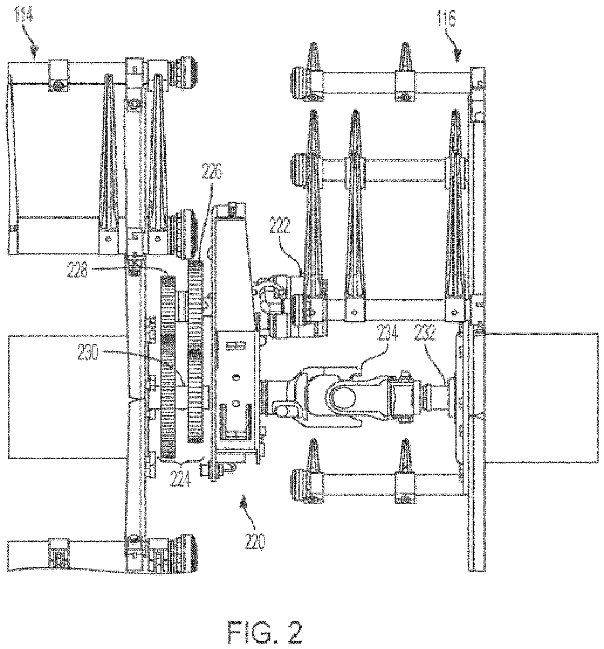

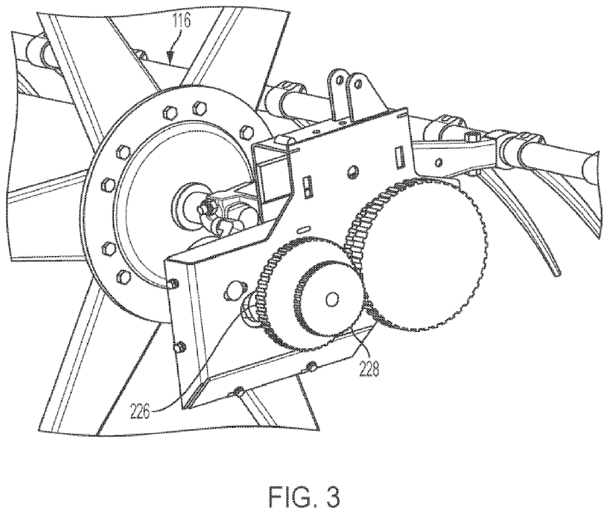

Referring to FIGS. 2 and 3, there is shown a variable speed reel drive 220 in accordance with an exemplary embodiment of the subject disclosure operatively connected to the first and second reels 114, 116. More particularly, the variable speed reel drive 220 comprises a variable speed motor 222 and a multi-speed gearbox 224 operatively coupled to the variable speed motor and at least one of the first and second reels. The variable speed motor may be a suitable hydraulic, electric or mechanical motor capable of operating at various output speeds. According to an aspect, the multi-speed gearbox 224 can be operatively coupled to the first and second reels 114, 116 for rotatably driving the first and second reels.

The multi-speed gearbox 224 comprises a first gear 226 having a first drive ratio. Additionally, the multi-speed gearbox 224 comprises a second gear 228 having a second drive ratio that differs from the first drive ratio for driving at least one of the first and second reels. Exemplary drive ratios for the first gear 226 can be e.g. 3.1:1, but can be higher or lower such as 2.8:1, 2.9:1, 3.0:1, 3.2:1, 3.3:1, 3.4:1, and exemplary drive ratios for the second gear 228 can be e.g. 4.2:1, but can be higher or lower such as 3.9:1, 4.0:1, 4.1:1, 4.3:1, 4.4:1, 4.5:1.

The first reel 114 includes a first reel drive shaft 230 for rotating the first reel, and the second reel 116 includes a second reel drive shaft 232 for rotating the second reel. The first reel drive shaft 230 is coupled to the second reel drive shaft via a universal joint 234 or other suitable connection.

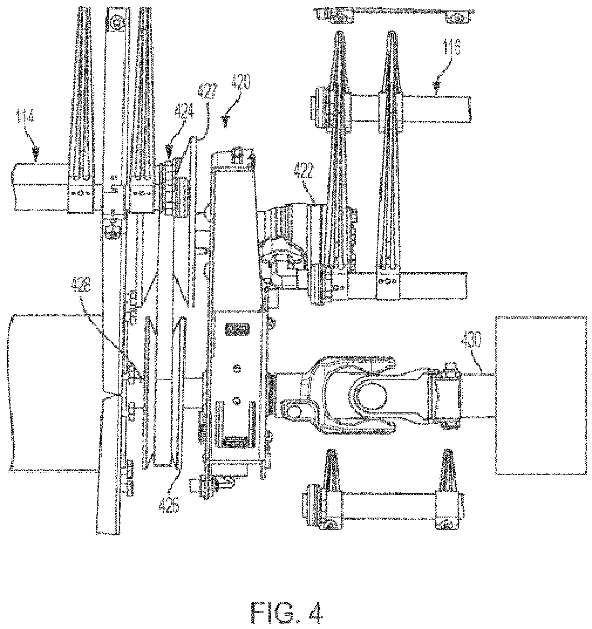

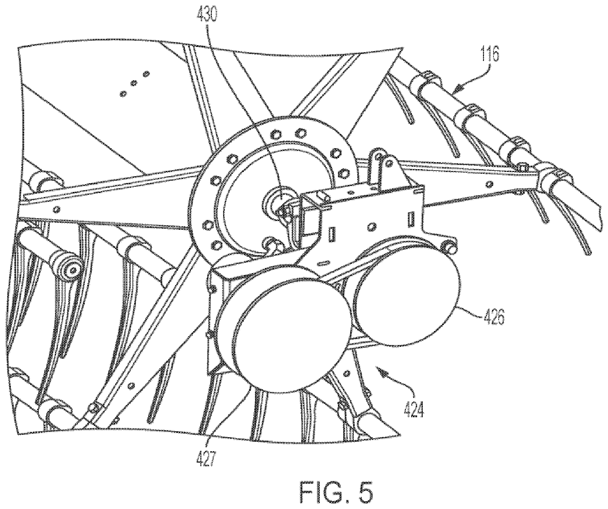

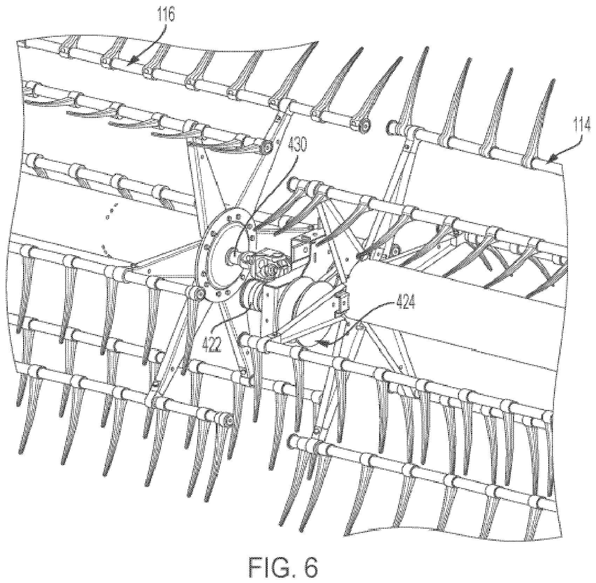

Referring to FIGS. 4-6, there is shown a variable speed reel drive 420 in accordance with another exemplary embodiment of the subject disclosure operatively connected to the first and second reels 114, 116. More particularly, the variable speed reel drive 420 comprises a motor 422 and a continuously variable transmission 424 operatively coupled to the motor and at least one of the first reel for rotatably driving the first reel and the second reel for rotatably driving the second reel. According to an aspect, the continuously variable transmission 424 is operatively connected to the first and second reels for driving the first and second reels. The motor may be a suitable hydraulic, electric or mechanical motor.

The continuously variable transmission 424 includes a first sheave 426 that can be mounted to one of a first reel drive shaft 428 of the first reel 114 and a second reel drive shaft 430 of the second reel 116, and a second sheave 427. As shown in FIG. 4, the sheave 426 is mounted to the first reel drive shaft 428. The second sheave 427 is rotatably driven by the motor. The exemplary embodiment shown in FIG. 4 is a variable-diameter pulley continuously variable transmission. Alternatively, the continuously variable transmission 424 can be a push-belt continuously variable transmission, a planetary continuously variable transmission, hydrostatic continuously variable transmission, or an infinitely variable transmission. U.S. Patent No. 6,086,499 discloses a push-belt continuously variable transmission applicable to the present embodiment. U.S. Patent No. 7,214,159 discloses a planetary continuously variable transmission applicable to the present embodiment. U.S. Patent No. 7,941,998 discloses a hydrostatic continuously variable transmission applicable to the present embodiment. And, U.S. Patent No. 4,854,919 discloses an infinitely variable transmission applicable to the present embodiment.

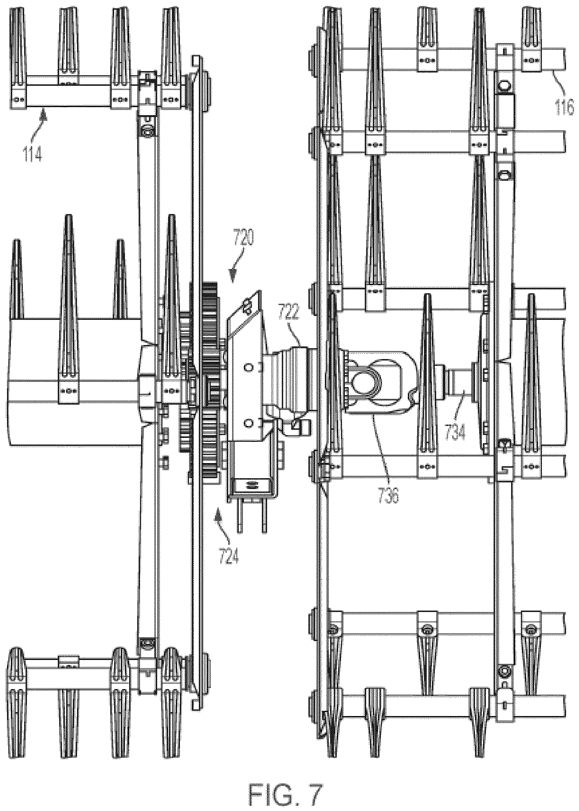

Referring to FIGS. 7 through 9, there is shown a variable speed reel drive 720 in accordance with another exemplary embodiment of the subject disclosure operatively connected to the first and second reels 114, 116. More particularly, the variable speed reel drive 720 comprises a motor 722, and a planetary gear drive 724 operatively coupled to the motor and at least one of the first and second reels. The motor may be a suitable hydraulic, electric or mechanical motor. According to an aspect, the planetary gear drive is 724 is operatively coupled to the first and second reels. Specifically, the planetary gear drive 724 is connected to the reel drive shaft of the first reel and operatively connected to the reel drive shaft of the second reel via a universal joint 736.

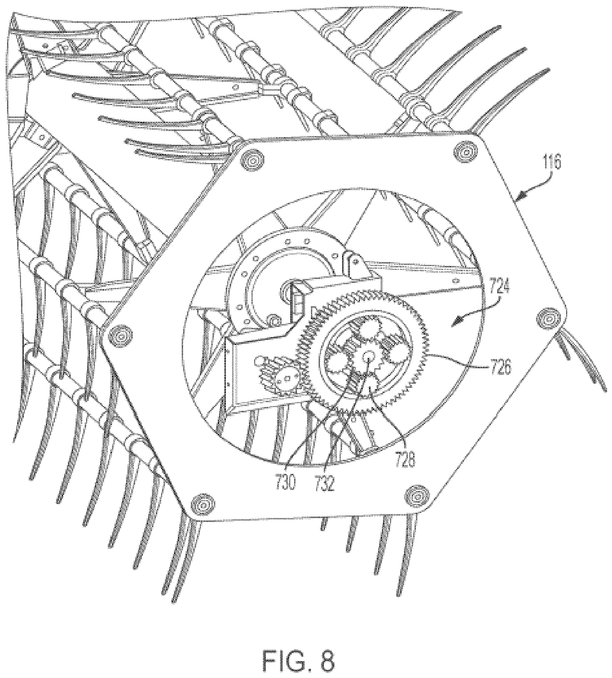

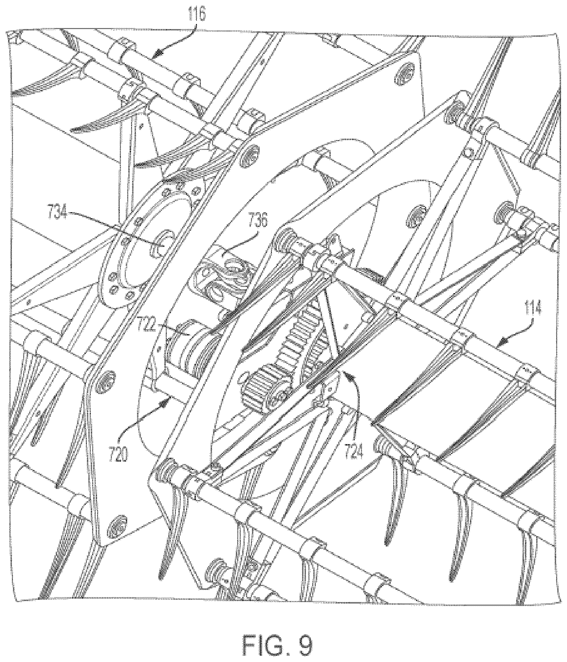

As most clearly shown in FIG. 8, the planetary gear drive is 724 comprises a ring gear 726, at least one planetary gear 728 within the ring gear, and a sun gear 730 within the ring gear. The sun gear 730 is operatively coupled to the first and second reels 114, 116. According to an aspect, the sun gear is affixed to at least one of a first reel drive shaft 732 of the first reel for rotating the first reel and a second reel drive shaft 734 of the second reel for rotating the second reel (FIGS. 7 and 9). In the present embodiment shown in FIG. 8, the sun gear 730 is connected to the reel drive shaft 732 of the first reel.

An advantage of the planetary gear arrangement is that the carrier can be locked to the sun gear or the ring gear and different ratios can be obtained. In general, by locking the carrier to the ring gear, the sun gear or at least one planetary gear, three speed ratios can be obtained in a physically compact assembly.

An advantage of the exemplary embodiments of the variable speed reel drives according to the subject disclosure is that it allows more control of the motor speed and/or the various drives so that the rotational velocity of adjacent reels may be reduced or increased in unison as may be dictated by crop conditions. This advantage allows higher torque or higher speed or lower torque or lower speed when needed. In addition, by providing motors and drives between adjacent reels, the effective cutting width of the header can be maintained without increasing the overall header width. Consequently, the header cuts crop for essentially its entire width without having uncut crop at the opposite ends of the header, as often occurs when reel drives are located at the outer ends of the reels of a multi-segment reel.

It will be appreciated by those skilled in the art that changes could be made to the exemplary embodiments described above without departing from the scope of the claims.

## Claims

1. An agricultural harvester header (102) comprising a first reel (114) and a second reel (116) adjacent the first reel, **characterized by**:
a variable speed reel drive (120) is between the first and second reels and operatively connected to at least one of the first reel for rotatably driving the first reel and the second reel for rotatably driving the second reel.

2. The agricultural harvester header of claim 1, wherein the variable speed reel drive is operatively connected to the first and second reels for rotatably driving the first and second reels.

3. The agricultural harvester header of claims 1-2, wherein the variable speed reel drive (220) comprises:
a variable speed motor (222); and
a multi-speed gearbox (224) operatively coupled to the variable speed motor and at least one of the first and second reels.

4. The agricultural harvester header of claim 3, wherein the multi-speed gearbox is operatively connected to the first and second reels for rotatably driving the first and second reels.

5. The agricultural harvester header of claims 3-4, wherein the multi-speed gearbox comprises:
a first gear (226) having a first drive ratio for driving at least one of the first and second reels, and
a second gear (228) having a second drive ratio that differs from the first drive ratio for driving the at least one of the first and second reels.

6. The agricultural harvester header of claims 1-5, wherein the first reel includes a first reel drive shaft (230) for rotating the first reel, the second reel includes a second reel drive shaft (232) for rotating the second reel, and wherein the first reel drive shaft is coupled to the second reel drive shaft via a universal joint (234).

7. The agricultural harvester header of claims 1-2, wherein the variable speed reel drive (420) comprises:
a motor (422); and
a continuously variable transmission (424) operatively connected to the motor and at least one of the first reel for rotatably driving the first reel and the second reel for rotatably driving the second reel.

8. The agricultural harvester header of claim 7, wherein the continuously variable transmission (424) is operatively connected to the first and second reels for rotatably driving the first and second reels.

9. The agricultural harvester header of claims 7-8, wherein the continuously variable transmission (424) is a push-belt continuously variable transmission, a variable-diameter pulley continuously variable transmission, a planetary continuously variable transmission, hydrostatic continuously variable transmission, or an infinitely variable transmission.

10. The agricultural harvester header of claims 7-9, wherein the continuously variable transmission includes a sheave (426) mounted to one of a first reel drive shaft (428) of the first reel and a second reel drive shaft (430) of the second reel.

11. The agricultural harvester header of claims 1-2, wherein the variable speed reel drive (720) comprises:
a motor (722); and
a planetary gear drive (724) operatively coupled to the motor and at least one of the first and second reels.

12. The agricultural harvester header of claim 11, wherein the planetary gear drive (724) is operatively coupled to the first and second reels.

13. The agricultural harvester header of claims 11-12, wherein the planetary gear drive (724) comprises:
a ring gear (726);
at least one planetary gear (728) within the ring gear; and
a sun gear (730) within the ring gear.

14. The agricultural harvester header of claim 13, wherein the sun gear (730) is operatively coupled to the first and second reels.

15. The agricultural harvester header of claims 13-14, wherein the sun gear (730) is affixed to at least one of a first reel drive shaft (732) of the first reel for rotating the first reel and a second reel drive shaft (734) of the second reel for rotating the second reel.

## Patentansprüche

1. Landwirtschaftlicher Erntevorsatz (102) mit einer ersten Haspel (114) und einer an die erste Haspel angrenzenden zweiten Haspel (116),
**gekennzeichnet durch**:
einen Haspelantrieb mit variabler Geschwindigkeit (120), der zwischen der ersten und der zweiten Haspel angeordnet ist und der wirkend mit mindestens einer aus der ersten Haspel, um die erste Haspel rotatorisch anzutreiben, und der zweiten Haspel, um die zweite Haspel rotatorisch anzutreiben, verbunden ist.

2. Landwirtschaftlicher Erntevorsatz nach Anspruch 1, wobei der Haspelantrieb mit variabler Geschwindigkeit wirkend mit der ersten Haspel und der zweiten Haspel verbunden ist, um die erste und die zweite Haspel rotatorisch anzutreiben.

3. Landwirtschaftlicher Erntevorsatz nach einem der Ansprüche 1 bis 2, wobei der Haspelantrieb mit variabler Geschwindigkeit (220) aufweist:
einen Motor (222) mit variabler Geschwindigkeit; und
ein mehrstufiges Getriebe (224), das wirkend mit dem Motor mit variabler Geschwindigkeit und mindestens einer aus der ersten und der zweiten Haspel verbunden ist.

4. Landwirtschaftlicher Erntevorsatz nach Anspruch 3, wobei das mehrstufige Getriebe wirkend mit der ersten und der zweiten Haspel verbunden ist, um die erste und die zweite Haspel rotatorisch anzutreiben.

5. Landwirtschaftlicher Erntevorsatz nach einem der Ansprüche 3 bis 4, wobei das mehrstufige Getriebe aufweist:
eine erste Getriebestufe (226) mit einem ersten Antriebsverhältnis zum Antreiben von mindestens einer aus der ersten und der zweiten Haspel, und
eine zweite Getriebestufe (228) mit einem zweiten Antriebsverhältnis, das sich von dem ersten Antriebsverhältnis unterscheidet, zum Antreiben von der mindestens einen aus der ersten und der zweiten Haspel.

6. Landwirtschaftlicher Erntevorsatz nach einem der Ansprüche 1 bis 5, wobei die erste Haspel eine erste Haspelantriebswelle (230) zum Rotieren der ersten Haspel umfasst, wobei die zweite Haspel eine zweite Haspelantriebswelle (232) zum Rotieren der zweiten Haspel umfasst, und wobei die erste Haspelantriebswelle mit der zweiten Haspelantriebswelle über ein Kardangelenk (234) verbunden ist.

7. Landwirtschaftlicher Erntevorsatz nach einem der Ansprüche 1 bis 2, wobei der Haspelantrieb mit variabler Geschwindigkeit (420) aufweist:
einen Motor (422); und
ein stufenloses Getriebe (424), das wirkend mit dem Motor und mindestens einer aus der ersten Haspel, um die erste Haspel rotatorisch anzutreiben, und der zweiten Haspel, um die zweite Haspel rotatorisch anzutreiben, verbunden ist.

8. Landwirtschaftlicher Erntevorsatz nach Anspruch 7, wobei das stufenlose Getriebe (424) wirkend mit der ersten und der zweiten Haspel verbunden ist, um die erste und die zweite Haspel rotatorisch anzutreiben.

9. Landwirtschaftlicher Erntevorsatz nach einem der Ansprüche 7 bis 8, wobei das stufenlose Getriebe (424) ein stufenloses Schubriemengetriebe, ein stufenloses Riemenscheibengetriebe mit variablem Durchmesser, ein stufenlos verstellbares Planetengetriebe, ein hydrostatisches stufenloses Getriebe oder ein unbeschränkt stufenloses Getriebe ist.

10. Landwirtschaftlicher Erntevorsatz nach einem der Ansprüche 7 bis 9, wobei das stufenlose Getriebe eine Riemenscheibe (426) umfasst, die an einer aus einer ersten Haspelantriebswelle (428) der ersten Haspel und einer zweiten Haspelantriebswelle (430) der zweiten Haspel angebracht ist.

11. Landwirtschaftlicher Erntevorsatz nach einem der Ansprüche 1 bis 2, wobei der Haspelantrieb mit variabler Geschwindigkeit (720) aufweist:
einen Motor (722); und
ein Planetengetriebe (724), das wirkend mit dem Motor und mindestens einer aus der ersten und der zweiten Haspel verbunden ist.

12. Landwirtschaftlicher Erntevorsatz nach Anspruch 11, wobei das Planetengetriebe (724) wirkend mit der ersten und der zweiten Haspel verbunden ist.

13. Landwirtschaftlicher Erntevorsatz nach einem der Ansprüche 11 bis 12, wobei das Planetengetriebe (724) aufweist:
ein Hohlrad (726);
mindestens ein Planetenrad (728) innerhalb des Hohlrads; und
ein Sonnenrad (730) innerhalb des Hohlrads.

14. Landwirtschaftlicher Erntevorsatz nach Anspruch 13, wobei das Sonnenrad (730) wirkend mit der ersten und der zweiten Haspel verbunden ist.

15. Landwirtschaftlicher Erntevorsatz nach einem der Ansprüche 13 bis 14, wobei das Sonnenrad (730) mit mindestens einer aus einer ersten Haspelantriebswelle (732) der ersten Haspel zum Rotieren der ersten Haspel und einer zweiten Haspelantriebswelle (734) der zweiten Haspel zum Rotieren der zweiten Haspel befestigt ist.

## Revendications

1. Un organe de coupe d'une moissonneuse agricole (102) comprenant un premier rabatteur (114) et un second rabatteur (116) adjacent au premier rabatteur, **caractérisé en ce que** :
un entraînement de rabatteur à vitesse variable (120) se trouve entre le premier et le second rabatteur et est raccordé fonctionnellement à au moins l'un du premier rabatteur pour l'entraînement rotatif du premier rabatteur ou du second rabatteur pour l'entraînement rotatif du second rabatteur.

2. L'organe de coupe d'une moissonneuse agricole selon la revendication 1, dans lequel l'entraînement du rabatteur à vitesse variable est raccordé fonctionnellement au premier et au second rabatteur pour entraîner de manière rotative le premier et le second rabatteur.

3. L'organe de coupe d'une moissonneuse agricole selon les revendications 1 et 2, dans lequel l'entraînement de rabatteur à vitesse variable (220) comprend :
un moteur à vitesse variable (222) ; et
une boîte de vitesses à plusieurs vitesses (224) couplée fonctionnellement au moteur à vitesse variable et à au moins l'un du premier ou du second rabatteur.

4. L'organe de coupe d'une moissonneuse agricole selon la revendication 3, dans lequel la boîte de vitesses à plusieurs vitesses est raccordée fonctionnellement au premier et au second rabatteur pour entraîner de manière rotative le premier et le second rabatteur.

5. L'organe de coupe d'une moissonneuse agricole selon les revendications 3 et 4, dans lequel la boîte de vitesses à plusieurs vitesses comprend :
une première vitesse (226) ayant un premier rapport d'entraînement pour entraîner au moins l'un du premier ou du second rabatteur, et
une seconde vitesse (228) ayant un second rapport d'entraînement différent du premier rapport d'entraînement pour entraîner au moins l'un du premier ou du second rabatteur.

6. L'organe de coupe d'une moissonneuse agricole selon les revendications 1 à 5, dans lequel le premier rabatteur comprend un premier arbre d'entraînement de rabatteur (230) pour la rotation du premier rabatteur, le second rabatteur comprend un second arbre d'entraînement de rabatteur (232) pour la rotation du second rabatteur, et dans lequel le premier arbre d'entraînement de rabatteur est couplé au second arbre d'entraînement de rabatteur à l'aide d'un joint universel (234).

7. L'organe de coupe d'une moissonneuse agricole selon la revendication 1 et la revendication 2, dans lequel l'entraînement de rabatteur à vitesse variable (420) comprend :
un moteur (422) ; et
une transmission à variation continue (424) raccordée fonctionnellement au moteur et à au moins l'un du premier rabatteur pour l'entraînement rotatif du premier rabatteur ou du second rabatteur pour l'entraînement rotatif du second rabatteur.

8. L'organe de coupe d'une moissonneuse agricole selon la revendication 7, dans lequel la transmission à variation continue (424) est raccordée fonctionnellement au premier et au second rabatteur pour entraîner de manière rotative le premier et le second rabatteur.

9. L'organe de coupe d'une moissonneuse agricole selon les revendications 7 et 8, dans lequel la transmission à variation continue (424) est une transmission à variation continue avec courroie de poussée, une transmission à variation continue avec poulie à diamètre variable, une transmission à variation continue planétaire, une transmission à variation continue hydrostatique ou une transmission à variation infinie.

10. L'organe de coupe d'une moissonneuse agricole selon les revendications 7 à 9, dans lequel la transmission à variation continue comprend une poulie (426) montée soit sur un premier arbre d'entraînement de rabatteur (428) du premier rabatteur, soit sur un second arbre d'entraînement de rabatteur (430) du second rabatteur.

11. L'organe de coupe d'une moissonneuse agricole selon les revendications 1 et 2, dans lequel l'entraînement de rabatteur à vitesse variable (720) comprend :
un moteur (722) ; et
un entraînement par engrenages planétaires (724) couplé fonctionnellement au moteur et à au moins l'un du premier ou du second rabatteur.

12. L'organe de coupe d'une moissonneuse agricole selon la revendication 11, dans lequel l'entraînement par engrenages planétaires (724) est couplé fonctionnellement au premier et au second rabatteur.

13. L'organe de coupe d'une moissonneuse agricole selon les revendications 11 et 12, dans lequel l'entraînement par engrenages planétaires (724) comprend :
une couronne dentée (726) ;
au moins un engrenage planétaire (728) à l'intérieur de la couronne dentée ; et
un pignon solaire (730) à l'intérieur de la couronne dentée.

14. L'organe de coupe d'une moissonneuse agricole selon la revendication 13, dans lequel le pignon solaire (730) est couplé fonctionnellement au premier et au second rabatteur.

15. L'organe de coupe d'une moissonneuse agricole selon les revendications 13 et 14, dans lequel le pignon solaire (730) est solidaire à au moins l'un du premier arbre d'entraînement de rabatteur (732) pour la rotation du premier rabatteur ou du second arbre d'entraînement de rabatteur (734) pour la rotation du second rabatteur.
